# EUROPEAN PATENT APPLICATION

(11) **EP 4 481 240 A1**
(43) Date of publication of application: **25.12.2024**
(21) Application number: 23386064.2
(22) Date of filing: 20.07.2023
(51) Int. Cl.: F16H 61/12, G07C 5/00

(54) **VEHICLE GEARBOX CONTROL DEVICE**

(30) Priority: 21.06.2023 GR 20230100498
(71) Applicant: "Christos Mourafetis Ke Sia E.E." with d.t. "JPC Transmission Service E.E.", 19300 Aspropirgos (GR)
(72) Inventor: Mourafetis, Christos, 15126 Marousi (GR)

(57) **Abstract**

The vehicle transmission control device of the present invention consists of a box (1) with a power cable (2) from the vehicle battery (3), connected via a self-contained wiring harness (4) to the vehicle transmission (5). This connection allows engagement and disengagement of gears in the gearbox (5), through the device, bypassing the gearbox master (5). In addition, it also has a connection harness with pressure transducers (6) in the box (5) so that it is possible to measure pressures in it. At the same time, it has a buzzer (7) to indicate to the operator the reversing of the vehicle, while it communicates with a tablet or computer (8) to receive commands and send the relevant results of the actions.

## Description

### FIELD OF ART

The invention refers to the field of mechanical engineering and machines in general. In particular it refers to the field of mechanical elements and units and in particular to the general measures for the production and maintenance of the efficient operation of machines or installations. Even more specifically it refers to the interconnection of machines and especially to the control of gears that transmit rotary motion. It specifically refers to a selection device with electrical switches or sensors for selection and specifically refers to a vehicle gear box control device.

### BACKGROUND OF THE INVENTION

The vehicle transmission control device disclosed in the present invention has not been disclosed in the prior art.

It is commonly accepted that both in Greece and worldwide, a number of vehicles, especially heavy-duty ones, such as for example large tippers, loaders, etc. are used for years, often beyond their reasonable or expected lifespan. The main reason this happens is the significant cost of replacing these vehicles. Construction machinery and heavy-duty machinery in general are used daily in adverse environmental conditions, while at the same time they are subject to unpredictable mechanical stresses. In addition, the drivers and operators of these machines often cause damage to the parts of the mechanical assemblies of the vehicles, due to clumsy manipulations that they may perform, further reducing their lifespan.

Damage and subsequent problems, especially in vehicle engines or transmissions, can have results ranging from a simple repair to keep the vehicle running, to immobilizing it, making it impossible to move autonomously. It becomes obvious that the inability of a machine to be removed from an inaccessible or remote area, due to a breakdown, entails significant disadvantages, both in terms of continuing the project at hand, and in terms of repair costs. Especially in the case of older vehicles, spare parts can be scarce, repairs can take a long time, and the vehicle should remain decommissioned either in an inaccessible area if it cannot be towed, or in an area awaiting the completion of repairs, so that it can be put back into use.

The most frequent problems presented concern either errors in the electronic and electrical control parts of the vehicle, or worn wiring, or bad calibrations of the vehicle's sensors. These problems are rather expected, since the specific components, namely electronic and electrical parts, sensors or wiring, are also the most sensitive elements of a heavy-duty vehicle, which often operates under difficult conditions.

It is thus an object of the present invention to advantageously address the aforementioned disadvantages and shortcomings of the prior art by proposing a vehicle gear box control device.

It is a further object of the present invention to provide a vehicle transmission control device which bypasses the wiring of transmission units and forces a gear to engage.

It is a further object of the present invention to provide a vehicle transmission control device, which receives data from the sensors of a vehicle's transmission and draws conclusions about its good or bad condition.

It is a further object of the invention to provide a vehicle gearbox control device which outputs data on the condition of a gearbox by checking these sensors and also pressure readings from various parts of the gearbox.

A further advantage of the invention is the fact that after the repair of a gearbox, the relevant technician can check its correct operation, verifying the correct engagement and disengagement of the gears, as well as the correct operation of sensors, but also of individual elements, such as the oil pump, thus preventing possible failures.

A further feature of the vehicle transmission control device is that it allows its user, in internal combustion engines, to use it on the machine in the event of a sensor reading error. In this way, the user itself gives the sensor data to the engine's brains and can thus conclude whether it is a sensor or brains error.

In addition, in test room conditions, he can start either a control module or the engine for extended tests, making use of the corresponding wiring of the device. It can then simulate supported electronic manipulations of modern machines and increase and decrease operating revolutions.

A further feature of the invention is that it provides the ability to improve gearbox troubleshooting and minimize the man-hours and skilled personnel required.

An additional feature of the invention is that it offers the possibility of personalizing the gear changes of the gearbox and exploiting the data of the sensors at will, beyond the specifications of the manufacturer.

Another advantage of the invention is that it offers the ability to store the test data and export it to an electronic file for delivery to the customer, or for further processing by the technician.

These and other objects, features and advantages of the invention will become apparent in the following detailed description.

### BRIEF DESCRIPTION OF THE DRAWINGS

The invention will become apparent to those skilled in the art by reference to the accompanying drawings in which it is illustrated in an indicative non-limiting manner.
Figure 1 shows an indicative illustration of a heavy-duty vehicle, showing the connection of the device of the invention to the transmission and battery of the vehicle.

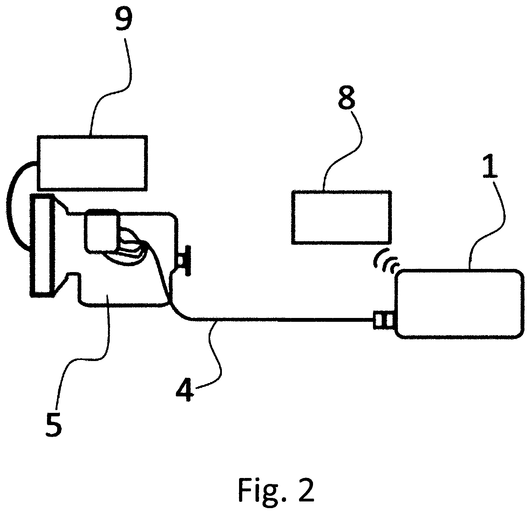

Figure 2 shows an indicative illustration of the interface of the device with the transmission of a vehicle.
Figure 3 shows an indicative illustration of the device and how it interfaces with an internal combustion engine.

### DETAILED DESCRIPTION OF A PREFERRED EMBODIMENT

Referring now to the accompanying drawings, we will describe exemplary embodiments of the vehicle transmission control device.

Using this device, the user can take control of automatic hydraulic transmissions of various manufacturers, which are used in construction machinery and buses, not excluding the use in passenger vehicles. Also, the user can start and control electronic internal combustion diesel engines used in construction machinery, boats, electric generators and all kinds of machinery and vehicles. Finally, it can control with absolute precision, identical to the manufacturer's one, all kinds of analog or digital hydraulic valves.

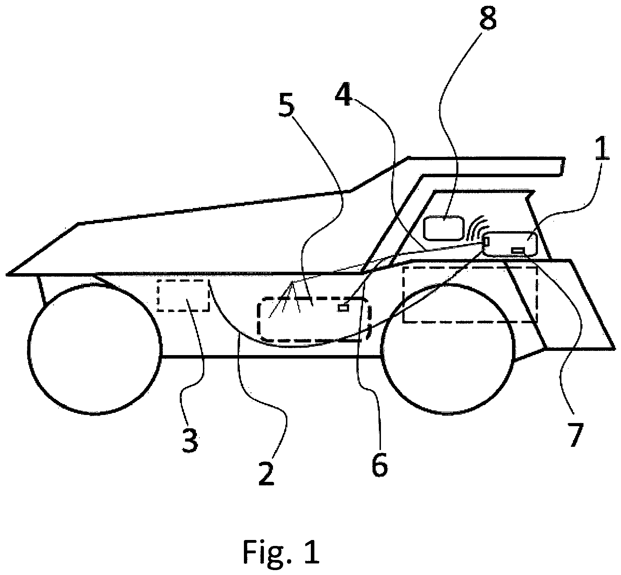

The device provided here connects directly to the gearbox, without using the manufacturer's cable harnesses. The vehicle gearbox control device consists of a box (1), Fig. 1, to which a power cable (2) is connected, which is connected to the vehicle battery (3), from which it receives the relevant power supply for the operation of the device. In addition, self-contained cable harnesses (4) apply separately to the device, which are connected to the socket provided by each gear box (5) of a vehicle for its control. There are many different cable harnesses (4), so that the user can choose the appropriate one that suits his vehicle, depending on the gearbox (5) the latter has. Connecting the device to the gearbox (5) allows the user to control 15 analog solenoid valves (PWM) at a frequency controlled by him, with dynamic measurement of the current that passes through them, per channel, and therefore of their resistance. In addition, through the connection of the device to the gearbox (5), measurement of 5 speed sensors is carried out, regardless of their manufacturing technology, with the possibility of simultaneous measurement of different types of sensors, measurement of 2 temperature sensors (thermistors), regardless of their manufacturing technology, measurement of 10 digital sensors on/off, but also measurement of 5 analog/digital sensors. Finally, 4 electronic potentiometers are used to control the throttle on the engines.

At the same time, the device also has a harness (6) to connect it to pressure transducers so that 16 such transducers can be measured in a gearbox (5) with a 4-20 mA protocol. The connection of the harness (6) is made on the sockets provided by each gearbox (5). Finally, the device also has a buzzer (7), which is activated by the user, whenever he engages reverse gear, in order to protect people who may be moving out of his field of vision and behind the vehicle.

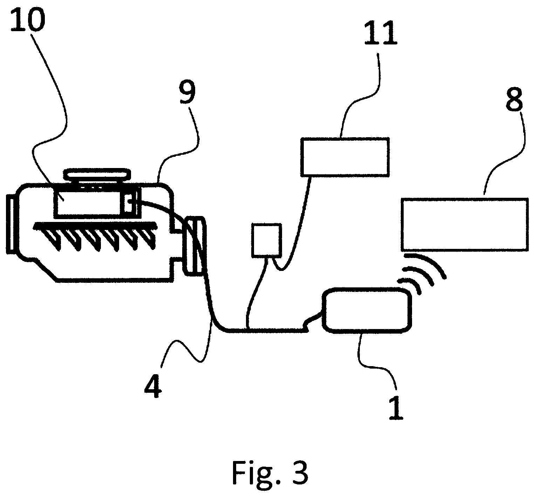

The device uses software for its operation and for the application of different scenarios, so that by connecting the cable harness (4) to the gearbox (5) the different gear ratios are engaged and disengaged and therefore the correct operation of the gearbox is checked (5), while at the same time the correct operation of the individual sensors and parts, such as the oil pump, is checked, preventing any failures. The device is operated by a separate device, which can be either a computer or a tablet (8), while the transmission of the relevant commands and the display of the corresponding results can be done both wired and wireless.
In an alternative embodiment of the invention, the device may be connected directly to the internal combustion engine (9), Fig. 3, of the vehicle, for example, in the event of a sensor reading error. In this way, the user itself gives the sensor data to the brains (10), Fig. 3, of the motor (9) and can thus conclude whether it is a sensor or brains (10) error. Also, in test room conditions it can start either a control module (brains) or the engine (9) for extended tests. It is also able to simulate supported electronic manipulations and increase or decrease the operating revolutions. All this is possible even with the parallel interface to the manufacturer's diagnostic tool (11).

## Claims

1. A vehicle gear box control device, wiredly or wirelessly connected to a computer/tablet (8), consisting of a box (1) with a power cable (2) for power supply from a vehicle battery (3), with a buzzer (7) for signaling the reversing of the vehicle, **characterized in that** it has an independent cable harness (4) for connection to a vehicle gearbox (5), for the forced engagement and disengagement of a gear ratio and a connection cable harness with pressure transducers (6) in the vehicle gearbox (5) to measure pressures on it.

2. A vehicle gearbox control device according to claim 1, **characterized in that** it is connected to different types of wiring harnesses (4) for connection to different types of vehicle gearboxes (5).

3. The vehicle gearbox control device according to claim 1, **characterized in that** it is connected in parallel with a manufacturer's diagnostic tool (11).
